# Europäisches Patentamt

## European Patent Office

### Office européen des brevets

(19)

(11) Veröffentlichungsnummer: **0 350 631 B1**

(12) **EUROPÄISCHE PATENTSCHRIFT**

(45) Veröffentlichungstag der Patentschrift: **23.12.92**

(51) Int. Cl.5: **A01D 80/00**

(21) Anmeldenummer: **89110682.5**

(22) Anmeldetag: **13.06.89**

(54) **Heumaschine für Front- und Heckanbau an Schlepper.**

(30) Priorität: **09.07.88 DE 8808847 U**

(43) Veröffentlichungstag der Anmeldung:
**17.01.90 Patentblatt 90/03**

(45) Bekanntmachung des Hinweises auf die
Patenterteilung:
**23.12.92 Patentblatt 92/52**

(84) Benannte Vertragsstaaten:
**AT CH DE FR IT LI NL**

(56) Entgegenhaltungen:
**DE-A- 2 909 774**
**DE-A- 3 619 045**
**DE-C- 3 223 768**

(73) Patentinhaber: **CLAAS SAULGAU GMBH**
**Postfach 1154**
**W-7968 Saulgau(DE)**

(72) Erfinder: **Rauch, Hans**
**Im Krummeschle 9**
**W-7968 Saulgau-Kleintissen(DE)**
Erfinder: **Deni, Franz**
**Bergstrasse 14**
**W-7968 Saulgau-Bogenweiler(DE)**

EP 0 350 631 B1

## Beschreibung

Die Erfindung bezieht sich auf eine Heumaschine für Front- und Heckanbau an Schlepper nach den Merkmalen des Oberbegriffes des Anspruches 1. Eine Heumaschine dieser Art ist zum Beispiel in der DE-B-32 23 768 beschrieben.

Bei Maschinen dieser Ausführung ist mit einer Feststellung des Maschinengestells in seiner Querachse zwangsläufig auch dessen Feststellung in seiner Hochachse verbunden. Die Maschine kann somit im Frontanbau nicht seitlich zur Schlepperlängsachse versetzt werden, um mit ihr Feldgrenzen (z. B. Zäune oder Gräben) von Erntegut freizuräumen oder bei breiten Schleppern ein Überfahren des ablaufenden Schwades von den Schlepperrädern zu vermeiden.

Die Aufgabe der Erfindung ist es daher, eine gattungsgemäße Maschine so zu verbessern, daß sie die ihr noch anhaftenden Mängel nicht mehr aufweist, d.h., daß sie bei Erfordernis durch eine geeignete Stellvorrichtung mit einfacher und schneller Handhabung in eine jeweils gewünschte Lage seitlich zur Schlepperlängsachse versetzt werden kann. Dies wird durch eine Ausführung nach den kennzeichnenden Merkmalen des Patentanspruches 1 erreicht.

Nach einem weiteren Merkmal der Erfindung besteht die längenveränderliche Strebe in an sich (beispw. aus der DE-A-2909774) bekannten Weise aus zwei teleskopartig verschiebbaren Teilstreben, die mittels einer vom Schleppersitz aus zu betätigenden Rastvorrichtung in verschiedenen Stellungen gegeneinander verriegelbar oder wahlweise durch Entriegelung frei verschiebbar sind.

Die Erfindung wird am Beispiel einer Kreiselheumaschine dargestellt und erläutert.

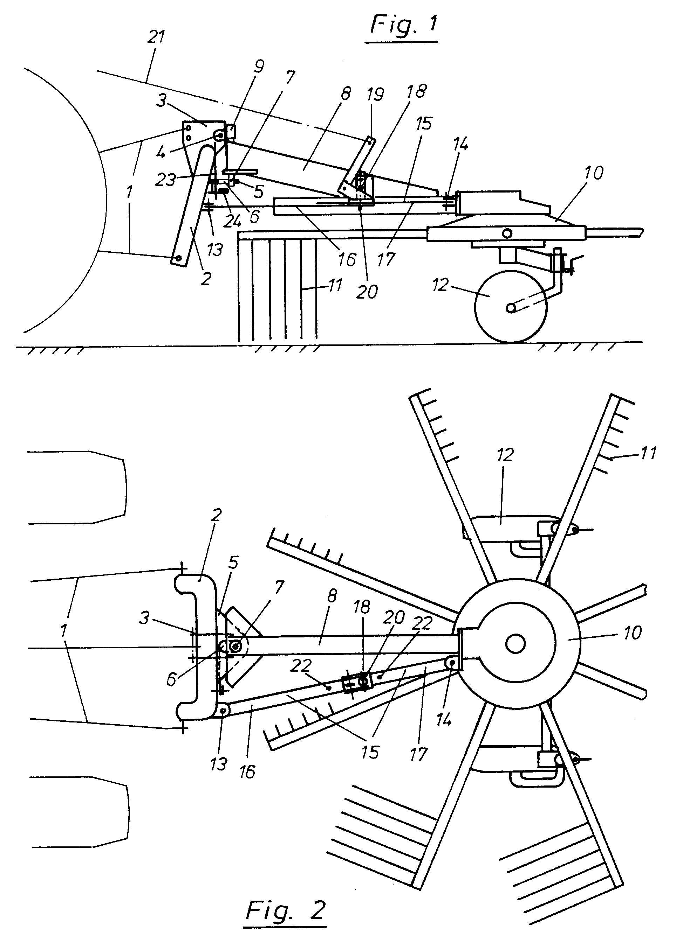

Fig. 1  zeigt eine Kreiselheumaschine, die an das vordere oder hintere Dreipunktgestänge eines Schleppers angebaut ist in Seitenansicht,

Fig. 2  zeigt den gleichen Gegenstand in Draufsicht

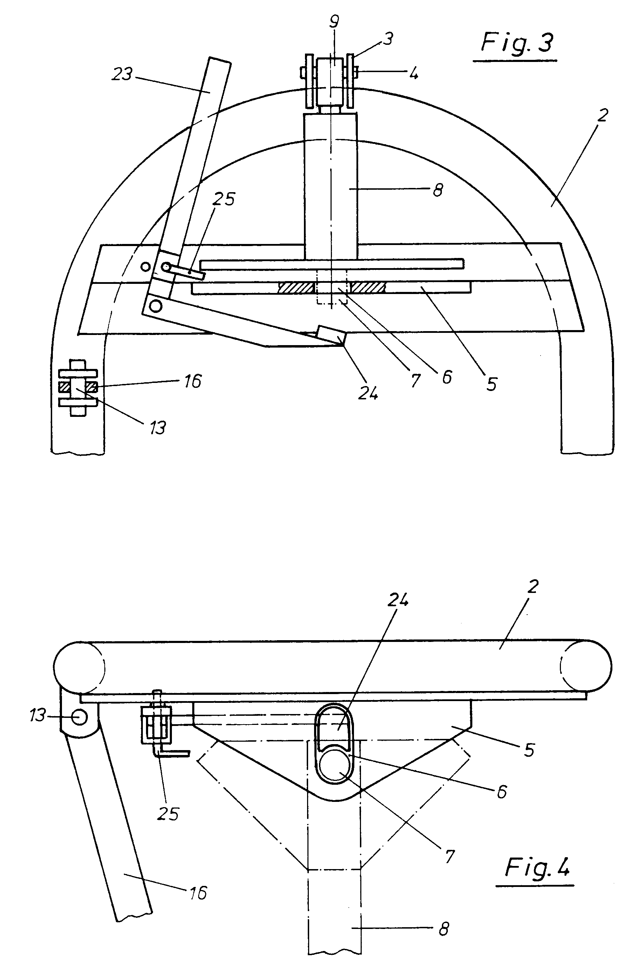

Fig. 3  zeigt einen Dreipunktrahmen in Rückansicht

Fig. 4  zeigt den gleichen Gegenstand in Draufsicht

In das Dreipunktgestänge (1) eines Schleppers ist ein bügelförmiger Dreipunktrahmen (2) eingehängt. Dieser nimmt in zwei Lagerschilden (3) einen horizontalen Schwenkbolzen (4) auf. Weiter ist mit dem Dreipunktrahmen (2) eine Lagerplatte (5) mit einem Langloch (6) fest verbunden. Das Langloch (6) wird von dem unteren Ende eines vertikalen Schwenkbolzens (7) durchsetzt.

Das Maschinengestell (8) trägt an seinem vorderen Ende einen Schwenkkopf (9), der sowohl von dem horizontalen Schwenkbolzen (4), als auch von dem vetikalen Schwenkbolzen (7) durchsetzt wird. Dadurch ist das Maschinengestell (8) zu dem Dreipunktrahmen (2) um eine Quer- und eine Hochachse schwenkbar. Am rückwärtigen Ende des Maschinengestelles (8) sind ein Arbeitskreisel (10) mit gesteuerten Zinken (11) und ein Fahrwerk (12) gelagert.

Zwischen einem Gelenkpunkt (13) am Dreipunktrahmen (2) und einem Gelenkpunkt (14) am rückwärtigen Ende des Maschinengestelles (8) ist eine längenveränderliche Strebe (15) eingespannt, die aus einer vorderen Teilstrebe (16), einer hinteren Teilstrebe (17) und einer Rastvorrichtung (18) besteht. Die Rastvorrichtung (18) hat einen drehbar gelagerten Winkelhebel (19), der mit einem senkrechten Rastbolzen (20) in Wirkverbindung steht. Wenn an einem zum Schlepper führenden Seilzug (21) gezogen wird, bewegt der Winkelhebel (19) den Rastbolzen (20) nach oben in eine arretierbare Lage, wodurch die Teilstreben (16), (17) gegeneinander verschiebbar werden.

Bei losgelassenem Seilzug (21) durchsetzt der Rastbolzen (20) unter der Wirkung einer nicht dargestellten Feder Bohrungen (22) in den Teilstreben (16), (17) und arretiert sie dadurch in der gewünschten Länge.

Beim Heckanbau der Heumaschine kann sich der vertikale Schwenkbolzen (7) in dem von ihm durchsetzten Langloch (6) in dessen Grenzen frei bewegen. Das Maschinengestell (8) kann sich dann um den horizontalen Schwenkbolzen (4) drehen . Beim Frontanbau muß diese Beweglichkeit ausgeschaltet werden. Zu diesem Zweck wird ein an einem Winkelhebel (23) befestigtes Füllstück (24) in das Langloch (6) eingeschwenkt. Dadurch kann sich der vertikale Schwenkbolzen (7) nicht mehr frei in dem Langloch (6) bewegen. Die Höhenanpassung der Maschine geschieht jetzt über einen Freigang des Dreipunktgestänges (1). Der Winkelhebel (23) kann durch einen Steckbolzen (25) in zwei Lagen festgelegt werden.

Beim Heckanbau der Heumaschine wird der Rastbolzen (20) in einer hochgehobenen Stellung arretiert. Die Teilstreben (16), (17) können sich gegeneinander verschieben und die Maschine kann sich zum Beispiel in der Kurve relativ zum Schlepper um den vertikalen Schwenkbolzen (7) drehen. Beim Frontanbau der Heumaschine steht der Rastbolzen (20) unter Wirkung einer Feder in einer unteren Lage und durchsetzt dabei eine Bohrung (22) in der hinteren Teilstrebe (17) und gleichzeitig eine frei gewählte Bohrung (22) in der vorderen Teilstrebe (16). Dadurch kann die Heumaschine wahlweise in Fahrtrichtung oder schräg dazu gefahren werden.

## Patentansprüche

1. Heumaschine für Front- und Heckanbau an Schlepper mit einem, um eine Hoch- (7) und eine Querachse (4) pendelbar mit einem Dreipunktrahmen (2) verbundenen Maschinengestell (8), das im Heckanbau in Arbeitsstellung frei schwenkbar ist, in Transportstellung aber in beiden Achsen festgestellt ist und im Frontanbau sowohl in der Arbeitsstellung, als auch in der Transportstellung in beiden Achsen festgestellt ist, gekennzeichnet durch die Kombination folgender. Merkmale:

a) Das Maschinengestell (8) ist nach Feststellung in seiner Querachse (4) weiter um die Hochachse (7) pendelbar,

b) zur Feststellung des Maschinengestelles (8) in seiner Querachse (4) ist ein mittels einer Hebelvorrichtung (23) in ein, das untere Ende des vertikalen Schwenkbolzens (7) aufnehmendes Langloch (6) am Dreipunktrahmen (2) einbringbares Füllstück (24) vorgesehen,

c) das Füllstück (24) ist für den Heckanbau der Maschine durch die Hebelvorrichtung (23) aus dem Langloch (6) ausbring- und feststellbar,

d) die Vorrichtung zur Feststellung des Maschinengestelles (8) um die als vertikalen Schwenkbolzen (7) ausgebildete Hochachse (7) für den Frontanbau der Maschine ist eine in ihrer Länge durch eine Rastvorrichtung (18) wahlweise einstellbare Strebe (15) zwischen Maschinengestell (8) und Dreipunktrahmen (2),

e) die Strebe (15) ist für den Heckanbau der Maschine durch Lösen der Rastvorrichtung (18) in ihrer Länge frei veränderlich.

2. Heumaschine nach Anspruch 1, dadurch gekennzeichnet, daß die längenveränderliche Strebe (15) in an sich bekannter Weise aus zwei teleskopartig verschiebbaren Teilstreben (16, 17) besteht, die mittels einer vom Schleppersitz aus zu betätigenden Rastvorrichtung (18) in verschiedenen Stellungen gegeneinander verriegelbar oder wahlweise durch Entriegelung frei verschiebbar sind.

## Claims

1. A hay making machine for front and rear mounting on tractors comprising a machine frame structure (8) which is connected to a three-point frame (2) swingably about a vertical axis (7) and a transverse axis (4) and which in the rear mounting mode is freely pivotable in the working position but is feed in both axes in the transport position and in the front mounting mode is fixed in both axes both in the working position and in the transport position, characterised by the combination of the following features:

a) the machine frame structure (8) is further swingable about the vertical axis (7) after fixing in its transverse axis (4),

b) a filling portion (24) which can be introduced by means of a lever arrangement (23) into a slot (6) on the three-point frame (2), which slots accommodates the lower end of the vertical pivot pin (7), is provided for fixing the machine frame structure (8) in its transverse axis (4),

c) the filling portion (24) can be moved out of the slot (6) and fixed by the lever arrangement (23) for rear mounting of the machine,

d) the means for fixing the machine frame structure (8) about the vertical axis (7) which is in the form of the vertical pivot pin (7), for front mounting of the machine, is a strut (15) between the machine frame structure (8) and the three-point frame (2), which strut is selectively adjustable in its length by a locking device (18), and

e) the strut (15) is freely variable in respect of its length for rear mounting of the machine by release of the locking device (18).

2. A hay making machine according to claim 1 characterised in that the variable-length strut (15) comprises in per se known manner two telescopically displaceable strut portions (16, 17) which, by means of a locking device (18) which is actuable from the tractor seat, are lockable relative to each other in different positions or are selectively freely displaceable by unlocking thereof.

## Revendications

1. Machine de fenaison destinée à être montée à l'avant ou à l'arrière d'un tracteur, comprenant un châssis (8) relié à un cadre à trois points (2) et pouvant effectuer un mouvement pendulaire autour d'un axe vertical (7) et d'un axe transversal (4), qui peut être pivoté librement dans la position de travail quand il est monté à l'arrière du tracteur, mais qui est bloqué par rapport aux deux axes quand il est en position de transport et qui est bloqué par rapport aux deux axes quand il est fixé à l'avant aussi bien en position de travail qu'en position de transport, caractérisée par la combinaison des caractéristiques suivantes:

a) le châssis (8) peut continuer d'effectuer un mouvement pendulaire autour de l'axe vertical (7) après blocage par rapport à son axe transversal (4);

b) un élément de remplissage (24) peut être amené par un dispositif à levier (23) dans un trou allongé (6) du cadre à trois points (2) qui reçoit l'extrémité inférieure du tourillon de pivotement vertical (7) pour bloquer le châssis (8) par rapport à son axe transversal (4);

c) l'élément de remplissage (24) peut être retiré du trou allongé (6) et retenu par le dispositif à levier (23) pour le montage de la machine à l'arrière du tracteur;

d) le dispositif permettant le blocage du châssis (8) par rapport à l'axe vertical (7) constitué sous forme d'un tourillon de pivotement vertical (7) pour le montage de la machine à l'avant du tracteur est formé par une jambe de force (15) dont la longueur peut être réglée au choix par un dispositif de verrouillage (18), entre le châssis (8) et le cadre à trois points (2);

e) la longueur de la jambe de force (15) peut être modifiée librement en dégageant le dispositif de verrouillage (18) en vue du montage de la machine à l'arrière du tracteur.

2.  Machine de fenaison selon la revendication 1, caractérisée en ce que la jambe de force (15) de longueur modifiable est constituée d'une façon connue en soi par deux jambes de force partielles (16, 17) pouvant se déplacer télescopiquement, qui peuvent être verrouillées l'une par rapport à l'autre dans diverses positions au moyen d'un dispositif de verrouillage (18) commandé à partir du siège du tracteur ou qui peuvent être au choix déplacées librement après déverrouillage.

Fig. 1

Fig. 2

5

*Fig. 3*

*Fig. 4*